# EUROPEAN PATENT SPECIFICATION

(11) **EP 4 114 168 B1**
(45) Date of publication and mention of the grant of the patent: **18.02.2026**
(21) Application number: 21708025.8
(22) Date of filing: 02.03.2021
(51) Int. Cl.: A01G 7/04, A01G 7/00

(54) **ESTIMATING A HARVESTING TIME FOR A PLANT SECTION BASED ON LIGHT MEASUREMENT INFORMATION**
SCHÄTZUNG EINER ERNTEZEIT FÜR EINEN PFLANZENABSCHNITT AUF BASIS VON LICHTMESSINFORMATIONEN
ESTIMATION DU MOMENT DE LA RÉCOLTE POUR UNE PARTIE DE LA PLANTE À PARTIR DES INFORMATIONS DE MESURE DE LA LUMIÈRE

(30) Priority: 03.03.2020 EP 20160580
(43) Date of publication of application: 11.01.2023
(73) Proprietor: Signify Holding B.V., 5656 AE Eindhoven (NL)
(72) Inventor: MOREL, Yannick, Martinus, Denise, 5656 AE Eindhoven (NL); KRIJN, Marcellinus, Petrus, Carolus, Michael, 5656 AE Eindhoven (NL); TUMOLO, Massimo, 5656 AE Eindhoven (NL)
(74) Representative: Verweij, Petronella Daniëlle
(86) International application number: PCT/EP2021/055189
(87) International publication number: WO 2021/175859

(56) References cited:
- EP-A1- 3 171 327
- US-A1- 2018 359 975
- US-A1- 2019 259 108

## Description

### FIELD OF THE INVENTION

The invention relates to a system for estimating a harvesting time in a plant growing environment.

The invention further relates to a method of estimating a harvesting time in a plant growing environment.

The invention also relates to a computer program product enabling a computer system to perform such a method.

### BACKGROUND OF THE INVENTION

A grower that grows plants in a plant growing environment usually likes to have an estimated harvesting time for a certain target yield . With the estimated harvesting time for this target yield, the grower may determine when he should harvest his plants or estimate how much yield he can expect when harvesting his plants on a certain day. The grower may take measures if he wants to harvest the target yield on a different day, e.g. decrease or increase the cultivation temperatures, or if he wants to increase his yield on the day of harvesting, e.g. increase CO2 and/or light levels. He may estimate a harvesting time manually or have a system estimate a harvesting time automatically. Automatic estimation of a harvesting time normally involves fruit ripeness detection, which poses a challenging problem.

An example of automatic estimation of a harvesting time is disclosed in US 2019/0259108 A1. US 2019/0259108 A1 discloses predicting yield and harvesting time based on identification of a growth stage, number of flowers/buts and/or ripening stage and consulting a database comprising average times to harvest from the identified stage. Identifying flowers/buts and coloration in ripening is done using imaging techniques such as Time-Of-Flight cameras, Light Detection And Ranging (LiDAR), and Complementary Color Spectra imaging (CCSi).

A drawback of the method of US 2019/0259108 A1 is that it requires the fruit ripeness to be determined for each plant individually, which is complex and expensive for most plants.

EP 3171327 A1 discloses an information processing apparatus including an obtainment unit configured to obtain spectroscopic information generated from image information of a plant captured by an imaging unit; and a generation unit configured to generate a control signal for controlling an environmental condition of the plant, based on the obtained spectroscopic information.

### SUMMARY OF THE INVENTION

It is a first object of the invention to provide a system, which is able to automatically estimate a harvesting time in a cost-effective manner.

It is a second object of the invention to provide a method, which can be used to automatically estimate a harvesting time in a cost-effective manner.

According to the invention, claim 1 discloses a system for estimating a harvesting time in a plant growing environment is disclosed. The system comprises at least one sensor interface and at least one processor configured to determine a light setting used by one or more light sources to illuminate a section of said plant growing environment with horticulture grow light that, in terms of light intensity and spectrum, is suitable for growing plants in said plant growing environment, said light setting comprising at least a color component associated with said section of said plant growing environment, obtain, via said at least one sensor interface, light measurement information from one or more color sensors when said one or more color sensors are co-located with said one or more light sources, and estimate a harvesting time for said section of said plant growing environment based on said light measurement information, an intensity of said color component in said light setting and a cultivation temperature protocol for said section of said plant growing environment, said cultivation temperature protocol comprising one or more assumed cultivation temperatures.

The one or more light sources illuminate the plant growing environment with horticulture grow light, in terms of light intensity and spectrum, suitable for growing the plants in the plant growing environment. Horticulture grow light may comprise one or more color components within the range of photosynthetic active radiation wavelengths (e.g., blue and/or red, possibly including deep red) and/or far-red. These light sources are generally provided as one or more horticulture luminaires arranged above the plants to be grown, in which case they are referred to as "top lighting", or in between or aside plants to be grown, in which case they are referred to as "interlighting". In the context of this disclosure, light sources are to be interpreted as horticulture luminaires designed to provide horticulture grow light to plants in the plant growing environment.

By using color sensors co-located with (e.g. embedded in or attached to) light sources and measuring how much light of a certain color component is reflected by the plants in a plant section, a harvesting time may be estimated for the plant section without requiring fruit ripeness to be detected for each plant individually. This allows continuous monitoring of fruit ripeness without human intervention and without requiring expensive components and may be used, for example, for flowering plants such as tomato plants, bell pepper plants, cannabis plants and orchids. Said color component is normally associated with a type/variation of the plants in said plant section, e.g. red for tomato plants and bell pepper plants. Said one or more color sensors may comprise one or more single-pixel sensors and/or one or more multi-pixel sensors (e.g. cameras), for example.

The one or more assumed cultivation temperatures may correspond to a single, manually configured temperature setting. In a more advanced situation, a temperature schedule for a heating and cooling system may specify a desired temperature setting for each of a plurality of time periods or a desired temperature profile in terms of temperature versus time during each of a plurality of time periods throughout the growth of the plant. The one or more assumed cultivation temperature, based on which a harvesting time is estimated, may be cultivation temperature settings used in said section of said plant growing environment during the growth of the plant(s) but especially may also be one or more future cultivation temperature settings to be used in said section of said plant growing environment, more specifically, the future cultivation temperature settings until harvest of the plant(s).

Growing of crops in greenhouses has been common practice for a long time. For the photosynthesis of the plants, the sun is being used as a main source of light. In recent years, the dark periods of the day have been filled in with artificial lighting to boost the growth of the crops. First HID lamps were used. The HID lamps are in the process of being replaced by LED. Advantages of LED are the capability to spectrally tune the LEDs according to the plants and humans desire, the higher efficacy of LED as compared to HID, and the fact that they can be instantaneously dimmed or boosted. By re-using these light sources for fruit ripeness detection, a harvesting time may be estimated in a cost-effective manner.

Preferably, light measurement information is obtained from said one or more color sensors continuously while the plants in said section of said plant growing environment are growing and the harvesting time is based on a moving average of multiple measurements or an average harvesting time is determined from harvesting times that are based on each of the measurements. This is beneficial, because the measurements themselves may contain lots of noise.

The cultivation temperature protocol may be determined from a grow protocol, for example, and typically includes a temperature profile (i.e. temperature as a function of time) to which a plant is (to be) exposed during the growth or cultivation of the plant. The temperatures specified in the grow protocol may be adjusted based on past measured and/or future expected greenhouse temperatures. The future expected greenhouse temperatures may be determined based on a weather forecast. For greenhouses, during winter, it is relatively easy to achieve the temperatures specified in the grow protocol by heating the greenhouse. In the summer, during warm days, the actual greenhouse temperature will exceed the temperature specified in the grow protocol, as the grower normally has limited means to cool the greenhouse (typically, he can only open the windows and close the screens). In examples, the cultivation temperature settings, cultivation temperature protocol and/or the growth protocol may be known to the system. In other examples, the cultivation temperature settings, cultivation temperature protocol and/or the growth protocol may be retrieved from another system, e.g., a climate computer of the plant growing facility or a remote server for managing operation of the plant growing facility. In the latter case, the system further comprises an interface for receiving the cultivation temperature settings, cultivation temperature protocol and/or the growth protocol.

Said at least one processor may be configured to control an environmental parameter based on a difference between said estimated harvesting time and a target harvesting time. Said environmental parameter may be temperature, light, nutrients, or humidity, for example. As a first example, this difference may be used to trigger special light protocols for vitamin C enhancement, nitrate reduction, etc.

As a second example, said system may further comprise at least one output interface and said at least one processor may be configured to determine an adjusted temperature protocol for said section of said plant growing environment based on said cultivation temperature protocol and a difference between said estimated harvesting time and said target harvesting time, said adjusted temperature protocol comprising one or more adjusted cultivation temperatures, and output, via said at least one output interface, a temperature control signal based on said adjusted temperature protocol.

While the growth, i.e. dimensions, of a plant depends largely on CO2, nutrition and light, fruit ripeness depends mostly on temperature. By controlling temperature and thereby influencing the ripening process, the harvesting time can be delayed or brought forward compared to the estimated harvesting time in order to achieve a target harvesting time. It may be beneficial to achieve a target harvesting time to get a harvest that is more stable from week to week, for example.

Said one or more color sensors may comprise a plurality of color sensors and said at least one processor may be configured to determine an average light measurement measured by said plurality of color sensors and estimate said harvesting time for said section of said plant growing environment based on said average light measurement and said intensity of said color component in said light setting. If a plurality of color sensors covers a plant section, averaging the light measurements may provide a more accurate measurement value.

Said system may further comprise at least one control interface and said at least one processor may be configured to control, via said at least one control interface, said one or more light sources to illuminate said section of said plant growing environment according to said light setting. The system may be a lighting control system, for example. This lighting control system may both estimate the harvesting time and control the one or more light sources.

Said at least one processor may be configured to control, via said at least one control interface, said one or more light sources according to said light setting while said light sources are positioned within a distance of organs of said plant. Said organs may be fruits, for example. The light reflected by the organs is of primary interest when estimating the harvesting time and the light sources closest to the organs are best positioned to render this light. These light sources may be inter-lighting devices, which typically hang between the plants, or parts thereof, for example.

Said at least one processor may be configured to control, via said at least one control interface, said one or more light sources to render grow light while a current temperature exceeds a temperature threshold. Grow light benefits growth of the plants when the current temperature is high enough.

Said at least one processor may be configured to control, via said at least one control interface, said one or more light sources to render light with a first light output level during a first moment and light with a second light output level during a second moment, an interval between said first moment and said second moment not exceeding an interval threshold, obtain, via said at least one sensor interface, first light measurement information measured at said first moment and second light measurement information measured at said second moment from at least one of said one or more color sensors, determine a daylight contribution based on a difference between said first light measurement information and said second light measurement information, determine adjusted light measurement information by subtracting said daylight contribution from said light measurement information, and estimate said harvesting time for said section of said plant growing environment based on said adjusted light measurement information.

If the plant growing environment is not dark when the light measurements for estimating the harvesting time are measured, then the daylight present will most likely influence the light measurements, e.g. because the light measurements are measured during the day in a greenhouse. Adjusting the light measurements for daylight will then be beneficial. By using two light measurements measured consecutively or at least shortly after each other while the active light source(s) changes from one light output level to another light output level, the daylight contribution may easily be determined.

Said at least one processor may be configured to receive said light setting from said one or more light sources or from a controller of said one or more light sources. For example, if the system is a climate control computer, the system normally does not control the one or more light sources itself and then needs to obtain the light setting from somewhere else.

Said at least one processor may be configured to determine a percentage of reflected light of said color component based on said light measurement information and said intensity of said color component in said light setting and estimate said harvesting time based on said percentage of reflected light and said cultivation temperature protocol.

Said at least one processor may be configured to estimate a potential current yield based on said percentage of reflected light and estimate said harvesting time based on a difference between said potential current yield and a desired yield and said cultivation temperature protocol. This makes it possible to estimate a harvesting time for a specific (desired) target yield. Said harvesting time may further be determined based on one or more (other) target values specified in a grow protocol, e.g. CO2 level and/or light level, which do not influence fruit ripeness, but do influence yield. Alternatively, a general measure of average ripeness, e.g. expressed as number of days or hours, may be determined based on said potential current yield or based on said percentage of reflected light and said harvesting time may be based on said general measure of average ripeness and said cultivation temperature protocol, e.g. by using a specified (e.g. average) growth cycle duration at said one or more assumed cultivation temperatures.

Said at least one processor may be configured to estimate a potential future yield, e.g. a potential yield in one week or in a few weeks, based on said percentage of reflected light and said cultivation temperature protocol. Said potential future yield may further be determined based on one or more (other) target values specified in a grow protocol, e.g. CO2 level and/or light level. This potential future yield may be communicated to the grower.

Said at least one processor may be configured to estimate said potential current yield based on said percentage of reflected light and calibration information, said calibration information comprising a user-inputted yield associated with said percentage of reflected lighting. Since a mapping of percentage of reflected light to yield typically depends on a grower's particular setup, calibration information may need to be obtained first, e.g. by the grower himself.

Said at least one processor may be configured to determine one or more parameter values, select calibration data from said calibration information based on said one or more parameter values, and estimate said potential current yield based on said percentage of reflected light and said calibration data. Said one or more parameter values may comprise position of said one or more light sources with respect to said plants, growth stage of said plants (e.g. tall or not tall), stem density of said plants and/or plant density in said section of said plant growing environment, for example. This may make it possible to estimate the potential current yield based on calibration data obtained for a somewhat different setup, e.g. if only the value of a certain parameter is different. For example, if the inter-lighting lights and/or the sensors are relocated to a different height and no other parameter values are changed, the system may be able to use the already existing calibration data and not require a re-calibration. On the other hand, it may not be possible to use calibration data for a setup in which the positions of the light sources are different with respect to the plants.

Said at least one processor may be configured to record yield over time at various temperatures and estimate said harvesting time further based on said recorded yield at said one or more assumed cultivation temperatures. (Other) measured environmental conditions like CO2 levels and/or light levels, may also be associated with said recorded yields. Said recorded yields may be associated with a certain grow protocol, for example. The latter is beneficial, for example, if the measured environmental conditions do not differ (substantially) from the target values specified in the grow protocol.

Further disclosed in claim 14 there is a method of estimating a harvesting time in a plant growing environment comprises determining a light setting used by one or more light sources to illuminate a section of said plant growing environment with horticulture grow light that, in terms of light intensity and spectrum, is suitable for growing plants in said plant growing environment, said light setting comprising at least a color component associated with said section of said plant growing environment, obtaining light measurement information from one or more color sensors when said one or more color sensors are co-located with said one or more light sources, and estimating a harvesting time for said section of said plant growing environment based on said light measurement information, an intensity of said color component in said light setting and a cultivation temperature protocol for said section of said plant growing environment, said cultivation temperature protocol comprising one or more assumed cultivation temperatures. Said method may be performed by software running on a programmable device. This software may be provided as a computer program product.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least a software code portion, the software code portion, when executed or processed by a computer, being configured to perform executable operations for estimating a harvesting time in a plant growing environment.

The executable operations comprise determining a light setting used by one or more light sources to illuminate a section of said plant growing environment, said light setting comprising at least a color component associated with said section of said plant growing environment, obtaining light measurement information from one or more color sensors when said one or more color sensors are co-located with said one or more light sources, and estimating a harvesting time for said section of said plant growing environment based on said light measurement information, an intensity of said color component in said light setting and a cultivation temperature protocol for said section of said plant growing environment, said cultivation temperature protocol comprising one or more assumed cultivation temperatures.

As will be appreciated by one skilled in the art, aspects of the present invention may be embodied as a device, a method or a computer program product. Accordingly, the disclosed system may take the form of an entirely hardware embodiment, an entirely software embodiment (including firmware, resident software, micro-code, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described below with reference to flowchart illustrations and/or block diagrams of methods, apparatus (systems), and computer program products according to examples thereof. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various examples thereof. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a block diagram of a first example of the system;
Fig. 2 depicts an example of a plant growing environment in which the system may be used;
Fig. 3 is a block diagram of a second example of the system;
Fig. 4 is a flow diagram of a first example of the method;
Fig. 5 is a flow diagram of a second example of the method;
Fig. 6 is a flow diagram of a third example of the method; and
Fig. 7 is a flow diagram of a fourth example of the method; and
Fig. 8 is a block diagram of an exemplary data processing system for performing the method of the invention.

Corresponding elements in the drawings are denoted by the same reference numeral.

### DETAILED DESCRIPTION OF THE EMBODIMENTS

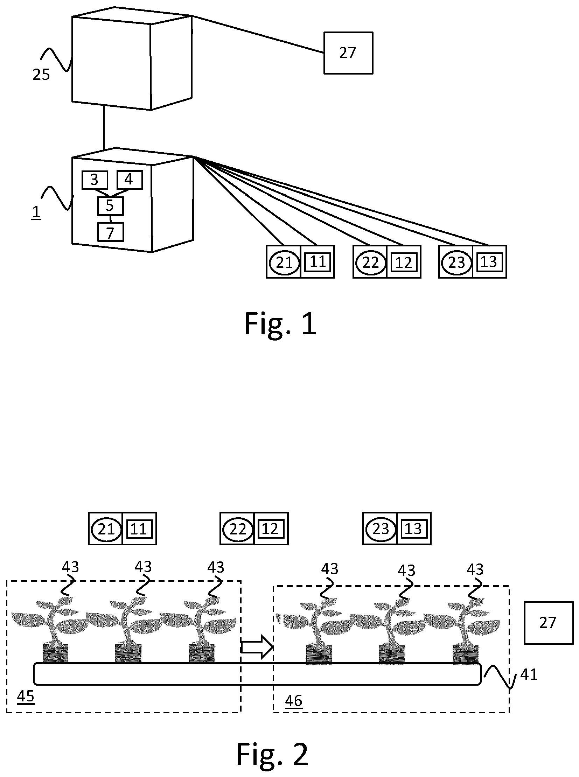

Fig. 1 shows a first example of the system for estimating a harvesting time in a plant growing environment: a light control computer 1. In the example of Fig. 1, the light conditions (light intensity, spectrum, and their dependence on the time of day and growth stage of the plant) are controlled by the light control computer 1 and the climate (temperature, humidity, CO2 level) is controlled by a climate control computer 25.

The light computer 1 controls light sources 11-13, e.g. LED modules. The light sources 11-13 may be, for example, top-lighting devices or inter-lighting devices, which typically hang between plants, or part thereof. The climate computer 25 controls a Heating, Ventilation and Air Conditioning (HVAC) system 27. Optionally, the climate control computer 25 may receive sensor data from one or more climate sensors (not shown), e.g. including a temperature sensor and/or a CO2 sensor, and control the HVAC system 27 based on this sensor data.

The light control computer 1 comprises a receiver 3, a transmitter 4, a processor 5, and memory 7. The processor 5 is configured to determine a light setting used by the light sources 11-13 to illuminate a section of the plant growing environment. The light setting comprises at least a color component associated with the section of the plant growing environment. In the example of Fig. 1, the processor 5 is configured to control, via the transmitter 4, the light sources 11-13 to illuminate the section of the plant growing environment according to the light setting.

The processor 5 is further configured to obtain, via the receiver 3, light measurement information from color sensors 21-23, which are co-located with the light sources 11-13, and estimate a harvesting time for the section of the plant growing environment based on the light measurement information (e.g. a spectral power distribution), an intensity of the color component in the light setting (e.g. a spectral power distribution) and a cultivation temperature protocol for the section of the plant growing environment.

The color component is normally associated with a type/variation of the plants in the plant section, e.g. red for tomato plants and bell pepper plants. The cultivation temperature protocol comprises one or more assumed cultivation temperatures. In a simple situation, the one or more assumed cultivation temperatures may correspond to a single, manually configured temperature setting. In a more advanced situation, a temperature schedule for a heating and cooling system may specify a desired temperature for each of a plurality of time periods.

The invention relies on a simple principle: considering e.g. a fruit lit by a single white light in a dark room, the reflected light will have a different spectrum. From the difference between the white spectrum and the reflected one, it is possible to retrieve the fruit color. It is not necessary to determine the color/fruit ripeness per plant, but it is sufficient to determine the average (fruit) color of the plant section. In practice, the light sources 11-13 might not emit white light, but might emit grow light. For this reason, the light setting used by the light source co-located with the sensor is obtained. In the example of Fig. 1, obtaining this light setting is relatively straightforward, as the light computer 1 controls this light source according to this light setting.

The processor 5 may be configured to provide the estimated harvesting time to a grower and/or to the climate control computer 25 and/or may be configured to trigger special light protocols for vitamin C enhancement, nitrate reduction, etc. based on a difference between the estimated harvesting time and a target harvesting time, for example.

The color sensors 21-23 may comprise one or more single-pixel sensors and/or one or more multi-pixel sensors (e.g. cameras), for example. Typically, each pixel of a multi-pixel sensor will be 'looking' at a (slightly) different location within the section (as would be the case when using a camera). In one mode of operation, the readings of the individual pixels could simply be averaged to, in the end, obtain a single measurement value.

In another mode of operation, the readings of the individual pixels are processed (e.g. averaged) with different weights per pixel to again obtain a single measurement value (for example, some regions in the field of view of a multi-pixel sensor are more likely to contain tomatoes than other regions; it might be beneficial to give these regions a different weight).

If the light measurements are performed in the absence of daylight (during the night), then having every color sensor regularly take a single measurement suffices. If the light measurements are performed in a greenhouse during the day, then additional measures need to be taken. Knowledge of the amount of daylight entering the greenhouse does not suffice in this case, as it does not indicate how much daylight remains low in the canopy and illuminates the plant and fruits. The spectrum of the light illuminating the plants and fruits is therefore basically unknown and moreover varying in time. As a result, it will not be possible to derive properties such as the average color of fruits (being an indication of the fruit ripeness of the plant section) from the color sensors' light measurements.

To solve this problem, the processor 5 may be configured to determine a daylight contribution, determine adjusted light measurement information by subtracting the daylight contribution from the light measurement information, and estimate the harvesting time for the section of the plant growing environment based on the adjusted light measurement information.

The processor 5 may be configured to determine this daylight contribution by controlling, via the transmitter 4, the light sources 11-13 to render light with a first light output level during a first moment and light with a second light output level during a second moment and obtain, via the receiver 3, first light measurement information measured at the first moment and second light measurement information measured at the second moment from the color sensors 21-23. In order to obtain a reliable result, the interval between the first moment and the second moment should not exceed an interval threshold. Optimal results are obtained when only the light output level of the artificial light changes and not the daylight level. The first measurement information and the second measurement information may be measured successively, for example. The spectrum of the light should preferably not change between the first and second moments.

The processor 5 may be configured to then determine the daylight contribution based on a difference between the first light measurement information and the second light measurement information. Thus, by taking the difference of the measurements, the daylight contribution is filtered out. The filtered result comprises information on the color of the fruits in the plant section. To get accurate values for the degree of ripeness, the filtered result is correlated with actual measured ripeness values (e.g. yield in kg/m²) and the colors associated with these values.

In the example of the computer 1 shown in Fig. 1, the computer 1 comprises one processor 5. In an alternative example, the computer 1 comprises multiple processors. The processor 5 may be a general-purpose processor, e.g. from Intel or AMD, or an application-specific processor. The processor 5 may run a Windows or Unix-based operating system for example. The memory 7 may comprise one or more memory units. The memory 7 may comprise one or more hard disks and/or solid-state memory, for example. The memory 7 may be used to store an operating system, applications and application data, for example.

The receiver 3 and the transmitter 4 may use one or more wired and/or wireless communication technologies to communicate with the light sources 11-13 and the color sensors 21-23, for example. In an alternative example, multiple receivers and/or multiple transmitters are used in computer 1 instead of a single receiver and a single transmitter. In the example shown in Fig. 1, separate receivers and separate transmitters are used. In an alternative example, the receiver 3 and the transmitter 4 are combined into a transceiver. The computer 1 may comprise other components typical for a computer such as a power connector and a display. The invention may be implemented using a computer program running on one or more processors.

In the example of Fig. 1, the system of the invention is a computer. In an alternative example, the system of the invention is a different device. In the example of Fig. 1, the system of the invention comprises a single device. In an alternative example, the system of the invention comprises a plurality of devices. In the example of Fig. 1, the computer 1 uses a transmitter to control the light sources. In an alternative example, the computer 1 uses only analog wires to control the light sources.

Fig. 2 depicts an example of a plant growing environment in which the system of Fig. 1 may be used. In the example of Fig. 2, a first section 45 and a second section 46 of the plant growing environment are moving on a conveyer belt 41. A subset of the light sources 11-13 is controlled to illuminate the first section 45 of the plant growing environment according to a light setting associated with this first section 45. This light setting may specify light with a red component when the plants in the first section 45 are tomato plants, for example. Each plant section comprises multiple containers, e.g. plant pots or plant trays. A container may comprise a single plant 43, but typically comprises multiple plants 43. Typically, more plants are conveyed over the conveyor belt 41 than represented in Fig. 2.

The processor 5 of the light control computer 1 of Fig. 1 is configured to control each of the light sources 11-13 according to a light setting that is associated with a plant section in which the plants' organs are within a distance of the respective light source. At the moment depicted in Fig. 2, the light source 11 is controlled according to the light setting associated with the first section 45 and the light source 13 is controlled according to the light setting associated with a second section 46. If the plant sections 45 and 46 comprise the same plants in the same growth stage, light source 12 may be controlled according to the light settings associated with the first and second sections 45 and 46.

In the example of Fig. 2, the first section 45 of the plant growing environment is covered by color sensor 21 and the second section 46 of the plant growing environment is covered by color sensor 23. The first section 45 and the second section 46 may also be covered by color sensor 22. For example, color sensor 22 may be a multi-pixel sensor of which some pixels cover the first section 45 and other pixels cover the second section 46.

If so, the processor 5 of the light control computer 1 of Fig 1 may be configured to determine a first average light measurement measured by both sensors 21 and 22 and estimate the harvesting time for the section 45 of the plant growing environment based on the first average light measurement and the intensity of the color component in the light setting used by light source 11 and may be configured to determine a second average light measurement measured by both sensors 22 and 23 and estimate the harvesting time for the section 46 of the plant growing environment based on the second average light measurement and the intensity of the color component in the light setting used by light source 13.

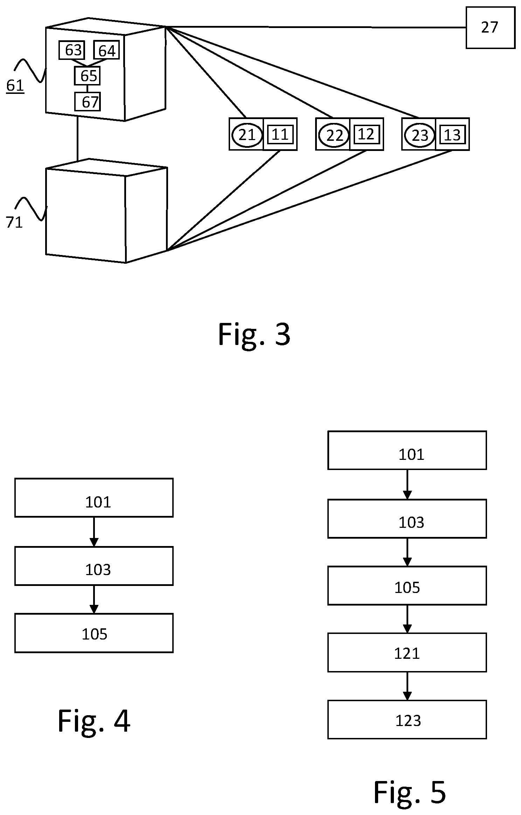

Fig. 3 shows a second example of the system for estimating a harvesting time in a plant growing environment: a climate control computer 61. In the example of Fig. 3, the climate (temperature, humidity, CO2 level) is controlled by the climate control computer 61 and the light conditions (light intensity, spectrum, and their dependence on the time of day and growth stage of the plant) are controlled by a light control computer 71. The light computer 71 controls light sources 11-13, e.g. LED modules. The climate computer 61 controls the Heating, Ventilation and Air Conditioning (HVAC) system 27.

The climate control computer 61 comprises a receiver 63, a transmitter 64, a processor 65, and memory 67. The processor 65 is configured to determine a light setting used by the light sources 11-13 to illuminate a section of the plant growing environment. This light setting comprises at least a color component associated with the section of the plant growing environment. In the example of Fig. 3, the processor 65 is configured to receive, via the receiver 63, the light settings used by the light sources 11-13 from the light control computer 71.

The processor 65 is further configured to obtain, via the receiver 63, light measurement information from color sensors 21-23, which are co-located with the light sources 11-13, and estimate a harvesting time for the section of the plant growing environment based on the light measurement information, an intensity of the color component in the light setting and a cultivation temperature protocol for the section of the plant growing environment. The cultivation temperature protocol comprises one or more targetted cultivation temperatures. The color sensors 21-23 may be cameras, for example.

In the example of Fig. 3, the processor 65 is configured to determine an adjusted temperature protocol for the section of the plant growing environment based on the cultivation temperature protocol and a difference between the estimated harvesting time and the target harvesting time. The adjusted temperature protocol comprises one or more adjusted cultivation temperatures. The processor 65 is further configured to output, via the transmitter 64, a temperature control signal based on the adjusted temperature protocol to the HVAC system 27.

Thus, once the estimated harvesting time has been determined, it can be used as an input for control. Given the target harvesting time, the system can use the current status to steer it towards the target one. Such a system could for example increase temperature to accelerate ripening or decrease temperature to postpone ripening. As a result, the harvest from week to week can be influenced, for example to achieve a harvest that is more stable from week-to-week or to aim for a certain harvest in a certain week.

The climate control computer 61 may additionally receive sensor data from one or more climate sensors (not shown), e.g. including a temperature sensor and/or a CO2 sensor, and control the HVAC system 27 based on this sensor data to achieve the adjusted temperature protocol.

In the example of the computer 61 shown in Fig. 3, the computer 61 comprises one processor 65. In an alternative example, the computer 61 comprises multiple processors. The processor 65 may be a general-purpose processor, e.g. from Intel or AMD, or an application-specific processor. The processor 65 may run a Windows or Unix-based operating system for example. The memory 67 may comprise one or more memory units. The memory 67 may comprise one or more hard disks and/or solid-state memory, for example. The memory 67 may be used to store an operating system, applications and application data, for example.

The receiver 63 and the transmitter 64 may use one or more wired and/or wireless communication technologies to communicate with the HVAC system 27 and the color sensors 21-23, for example. In an alternative example, multiple receivers and/or multiple transmitters are used in computer 61 instead of a single receiver and a single transmitter. In the example shown in Fig. 3, separate receivers and separate transmitters are used. In an alternative example, the receiver 63 and the transmitter 64 are combined into a transceiver. The computer 61 may comprise other components typical for a computer such as a power connector and a display. The invention may be implemented using a computer program running on one or more processors.

In the example of Fig. 3, the computer 61 uses a transmitter to control HVAC system 27. In an alternative example, the computer 61 uses only analog wires to control HVAC system 27. In the example of Fig. 3, the climate control computer 61 and the light control computer 71 are separate computers, each with its own processor. In an alternative example, the climate control computer 61 and the light control computer 71 are the same computer or share the same processor.

A first example of estimating a harvesting time in a plant growing environment is shown in Fig. 4. A step 101 comprises determining a light setting used by one or more light sources to illuminate a section of the plant growing environment. The light setting comprises at least a color component associated with the section of the plant growing environment. A step 103 comprises obtaining light measurement information from one or more color sensors when the one or more color sensors are co-located with the one or more light sources.

A step 105 comprises estimating a harvesting time for the section of the plant growing environment based on the light measurement information, an intensity of the color component in the light setting and a cultivation temperature protocol for the section of the plant growing environment. The cultivation temperature protocol comprises one or more targetted cultivation temperatures. An environmental parameter may be controlled based on a difference between the estimated harvesting time and a target harvesting time.

A second example of estimating a harvesting time in a plant growing environment is shown in Fig. 5. This second example is based on the first example of Fig. 4. A step 121 is performed after step 105. Step 121 comprises determining an adjusted temperature protocol for the section of the plant growing environment based on the cultivation temperature protocol and a difference between the estimated harvesting time and the target harvesting time. The adjusted temperature protocol comprises one or more adjusted cultivation temperatures. A step 123 comprises outputting a temperature control signal based on the adjusted temperature protocol.

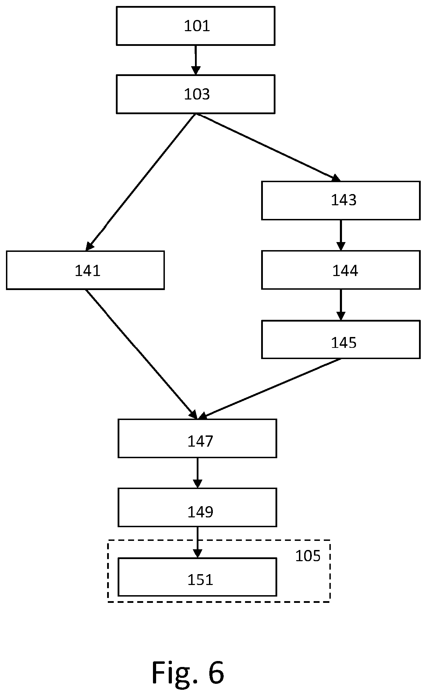

A third example of estimating a harvesting time in a plant growing environment is shown in Fig. 6. A step 101 comprises determining a light setting used by one or more light sources to illuminate a section of the plant growing environment. The light setting comprises at least a color component associated with the section of the plant growing environment. A step 103 comprises obtaining light measurement information from one or more color sensors when the one or more color sensors are co-located with the one or more light sources.

A step 141 comprises determining a percentage of reflected light of the color component based on the light measurement information and the intensity of the color component in the light setting. A step 143 comprises obtaining calibration information. The calibration information comprises user-inputted yields that are each associated with a percentage of reflected lighting. Yield may be expressed as kg/m², for example. A user may input a yield of 2 kg/m², for example.

A step 144 comprises determining one or more parameter values, e.g. based on user input or from a memory. The one or more parameter values comprise, for example, position of the one or more light sources with respect to the plants, growth stage of the plants, stem density of the plants and/or plant density in the section of the plant growing environment.

A step 145 comprises selecting calibration data from the calibration information obtained in step 143 based on the one or more parameter values determined in step 144. The calibration information or the calibration data is typically associated with a certain plant variety. The calibration data comprise user-inputted yields that are each associated with a percentage of reflected lighting. If the calibration information does not comprise calibration data associated with the determined parameter values, calibration data may be selected that can be processed in order to obtain yields that would likely be obtained with an arrangement and/or in circumstances represented by the parameter values determined in step 144.

A step 147 comprises estimating the potential current yield based on the percentage of reflected light determined in step 141 and the calibration data selected in step 145. If the calibration data is not associated with the determined parameter values, step 147 comprises processing the calibration data selected in step 145 to obtain yields that would likely be obtained with an arrangement and/or in circumstances represented by the parameter values determined in step 144, if possible. Of the selected calibration data, typically only the yield associated with the percentage of reflected light determined in step 141 needs to be used/processed.

A step 149 comprises determining a difference between the potential current yield determined in step 147 and a desired yield, which may be provided by a user. A step 151, which is an implementation of step 105 of Fig. 4, comprises estimating a harvesting time based on the difference determined in step 149 and the cultivation temperature protocol. The cultivation temperature protocol comprises one or more assumed cultivation temperatures and may be determined, for example, from a grow protocol. The harvesting time may further be estimated in step 151 based on one or more (other) target values specified in a grow protocol, e.g. CO2 levels and/or light levels, which do not influence fruit ripeness, but do influence yield.

In order to estimate the harvesting time based on the yield difference and the assumed cultivation temperatures, yields previously recorded over time at various cultivation temperatures may be used. By selecting yields associated with the assumed cultivation temperatures from the recorded yields, determining which of those yields corresponds to the potential current yield, determining which of those yields corresponds to the desired yield, and determining a difference between the time stamps associated with these two yields, the harvesting time may be estimated. (Other) measured environmental conditions like CO2 levels and/or light levels, may also be associated with the recorded yields. The recorded yields may be associated with a certain grow protocol, for example. The latter is beneficial, for example, if the measured environmental conditions do not differ (substantially) from the target values specified in the grow protocol. In the example of Fig. 6, step 141 is performed at least partly in parallel with steps 143-145. In an alternative example, step 141 is performed before step 143 or after step 145.

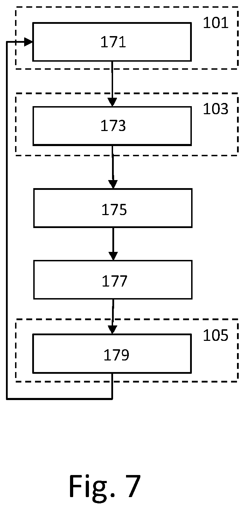

A fourth example of estimating a harvesting time in a plant growing environment is shown in Fig. 7. A step 171, which is an implementation of step 101 of Fig. 4, comprises controlling one or more light sources to render light with a first light output level during a first moment and light with a second light output level during a second moment, e.g. consecutively. In step 171, a light setting is determined that comprises at least a color component associated with the section of the plant growing environment and the one or more light sources are controlled to illuminate the section of the plant growing environment according to this light setting, normally while the one or more light sources are positioned within a distance of organs of the plant.

A step 173, which is an implementation of step 103 of Fig. 4, comprises obtaining first light measurement information measured at the first moment and second light measurement information measured at the second moment from at least one color sensor. A step 175 comprises determining a daylight contribution based on a difference between the first light measurement information and the second light measurement information.

A step 177 comprises determining adjusted light measurement information by subtracting the daylight contribution determined in step 175 from the light measurement information obtained in step 173.

A step 179, which is an implementation of step 105 of Fig. 4, comprises estimate a harvesting time for the section of the plant growing environment based on the adjusted light measurement information determined in step 177, an intensity of the color component in the light setting and a cultivation temperature protocol for the section of the plant growing environment. The cultivation temperature protocol comprises one or more assumed cultivation temperatures. Step 171 is repeated after step 179, after which the method proceeds as shown in Fig. 7.

In other words, artificial lighting and daylight illuminate plants (including vegetative parts and fruits), the light reflected from the plants, in particular the fruits, is captured by one or more color sensors (single-pixel or multi-pixel), and a system regularly receives measurements from the color sensor(s). A first measurement is done while light is rendered with a certain light level and a second measurement is done while light is rendered with another light level. The second measurement is performed soon after the first measurement to ensure the daylight conditions have not changed.

The results of the two measurements are subtracted to filter out the effect of the daylight (preferably, non-linearities in the sensor readings are accounted for). The system computes the average ripeness from this filtered result. The computed ripeness may be used in a feed-back loop to steer environmental factors such as temperature and light (e.g. by a control system such as a climate control system or a lighting control system).

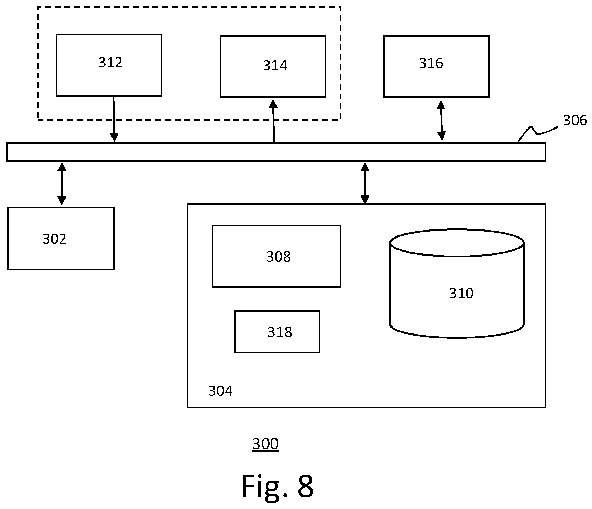

Fig. 8 depicts a block diagram illustrating an exemplary data processing system that may perform the method as described with reference to Figs. 4 to 7.

As shown in Fig. 8, the data processing system 300 may include at least one processor 302 coupled to memory elements 304 through a system bus 306. As such, the data processing system may store program code within memory elements 304. Further, the processor 302 may execute the program code accessed from the memory elements 304 via a system bus 306. In one aspect, the data processing system may be implemented as a computer that is suitable for storing and/or executing program code. It should be appreciated, however, that the data processing system 300 may be implemented in the form of any system including a processor and a memory that is capable of performing the functions described within this specification.

The memory elements 304 may include one or more physical memory devices such as, for example, local memory 308 and one or more bulk storage devices 310. The local memory may refer to random access memory or other non-persistent memory device(s) generally used during actual execution of the program code. A bulk storage device may be implemented as a hard drive or other persistent data storage device. The processing system 300 may also include one or more cache memories (not shown) that provide temporary storage of at least some program code in order to reduce the quantity of times program code must be retrieved from the bulk storage device 310 during execution. The processing system 300 may also be able to use memory elements of another processing system, e.g. if the processing system 300 is part of a cloud-computing platform.

Input/output (I/O) devices depicted as an input device 312 and an output device 314 optionally can be coupled to the data processing system. Examples of input devices may include, but are not limited to, a keyboard, a pointing device such as a mouse, a microphone (e.g. for voice and/or speech recognition), or the like. Examples of output devices may include, but are not limited to, a monitor or a display, speakers, or the like. Input and/or output devices may be coupled to the data processing system either directly or through intervening I/O controllers.

In an example, the input and the output devices may be implemented as a combined input/output device (illustrated in Fig. 8 with a dashed line surrounding the input device 312 and the output device 314). An example of such a combined device is a touch sensitive display, also sometimes referred to as a "touch screen display" or simply "touch screen". In such an example, input to the device may be provided by a movement of a physical object, such as e.g. a stylus or a finger of a user, on or near the touch screen display.

A network adapter 316 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 300, and a data transmitter for transmitting data from the data processing system 300 to said systems, devices and/or networks. Modems, cable modems, and Ethernet cards are examples of different types of network adapter that may be used with the data processing system 300.

As pictured in Fig. 8, the memory elements 304 may store an application 318. In various examples, the application 318 may be stored in the local memory 308, the one or more bulk storage devices 310, or separate from the local memory and the bulk storage devices. It should be appreciated that the data processing system 300 may further execute an operating system (not shown in Fig. 8) that can facilitate execution of the application 318. The application 318, being implemented in the form of executable program code, can be executed by the data processing system 300, e.g., by the processor 302. Responsive to executing the application, the data processing system 300 may be configured to perform one or more operations or method steps described herein.

Various examples of the invention may be implemented as a program product for use with a computer system, where the program(s) of the program product define functions of the examples (including the methods described herein). In one example, the program(s) can be contained on a variety of non-transitory computer-readable storage media, where, as used herein, the expression "non-transitory computer readable storage media" comprises all computer-readable media, with the sole exception being a transitory, propagating signal. In another example, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular examples only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of examples of the present invention has been presented for purposes of illustration, but is not intended to be exhaustive or limited to the implementations in the form disclosed. The examples were chosen and described in order to best explain the principles and some practical applications of the present invention, and to enable others of ordinary skill in the art to understand the present invention limited by the appended claims.

## Claims

1. A system (1,61) for estimating a harvesting time in a plant growing environment, said system (1,61) comprising:
at least one sensor interface (3,63); and
at least one processor (5,65) configured to:
- determine a light setting used by one or more light sources (11-13) to illuminate a section (45,46) of said plant growing environment with horticulture grow light that, in terms of light intensity and spectrum, is suitable for growing plants (43) in said plant growing environment, said light setting comprising at least a color component associated with said section (45,46) of said plant growing environment,
**characterized in that** the at least one processor is configured to
- obtain, via said at least one sensor interface (3,63), light measurement information from one or more color sensors (21-23) when said one or more color sensors (21-23) are co-located with said one or more light sources (11-13), and
- estimate a harvesting time for said section (45,46) of said plant growing environment based on (i) said light measurement information, (ii) an intensity of said color component in said light setting and (iii) a cultivation temperature protocol for said section (45,46) of said plant growing environment, said cultivation temperature protocol comprising one or more assumed cultivation temperatures.

2. A system (1,61) as claimed in claim 1, wherein said at least one processor (5,65) is configured to control an environmental parameter based on a difference between said estimated harvesting time and a target harvesting time.

3. A system (61) as claimed in claim 2, further comprising at least one output interface (64), wherein said at least one processor (65) is configured to:
- determine an adjusted temperature protocol for said section (45,46) of said plant growing environment based on said cultivation temperature protocol and a difference between said estimated harvesting time and said target harvesting time, said adjusted temperature protocol comprising one or more adjusted cultivation temperatures, and
- output, via said at least one output interface (64), a temperature control signal based on said adjusted temperature protocol.

4. A system (1,61) as claimed in any one of the preceding claims, wherein said at least one processor (5,65) is configured to determine a percentage of reflected light of said color component based on said light measurement information and said intensity of said color component in said light setting and estimate said harvesting time based on said percentage of reflected light and said cultivation temperature protocol.

5. A system (1,61) as claimed in claim 4, wherein said at least one processor (5,65) is configured to estimate a potential current yield based on said percentage of reflected light and estimate said harvesting time based on a difference between said potential current yield and a desired yield and said cultivation temperature protocol.

6. A system (1,61) as claimed in claim 5, wherein said at least one processor (5,65) is configured to estimate said potential current yield based on said percentage of reflected light and calibration information, said calibration information comprising a user-inputted yield associated with said percentage of reflected lighting.

7. A system (1,61) as claimed in claim 6, wherein said at least one processor (5,65) is configured to determine one or more parameter values, select calibration data from said calibration information based on said one or more parameter values, and estimate said potential current yield based on said percentage of reflected light and said calibration data.

8. A system (1,61) as claimed in claim 7, wherein said one or more parameter values comprise at least one of: position of said one or more light sources (11-13) with respect to said plants (43), growth stage of said plants (43), stem density of said plants (43) and plant (43) density in said section (45,46) of said plant growing environment.

9. A system (1,61) as claimed in any one of claims 5 to 8, wherein said at least one processor (5,65) is configured to record yield over time at various temperatures and estimate said harvesting time further based on said recorded yield at said one or more assumed cultivation temperatures.

10. A system (1,61) as claimed in any one of the preceding claims, wherein said one or more color sensors (21-23) comprise a plurality of color sensors and said at least one processor (5,65) is configured to determine an average light measurement measured by said plurality of color sensors and estimate said harvesting time for said section (45,46) of said plant growing environment based on said average light measurement and said intensity of said color component in said light setting.

11. A system (1) as claimed in any one of the preceding claims, further comprising at least one control interface, wherein said at least one processor (5) is configured to control, via said at least one control interface, said one or more light sources (11-13) to illuminate said section (45,46) of said plant growing environment according to said light setting.

12. A system (1) as claimed in claim 11, wherein said at least one processor (5) is configured to control, via said at least one control interface, said one or more light sources (11-13) according to said light setting while said light sources (11-13) are positioned within a distance of organs of said plant.

13. A system (1) as claimed in claim 11 or 12, wherein said at least one processor (5) is configured to:
- control, via said at least one control interface, said one or more light sources (11-13) to render light with a first light output level during a first moment and light with a second light output level during a second moment, an interval between said first moment and said second moment not exceeding an interval threshold,
- obtain, via said at least one sensor interface (3), first light measurement information measured at said first moment and second light measurement information measured at said second moment from at least one of said one or more color sensors (21-23),
- determine a daylight contribution based on a difference between said first light measurement information and said second light measurement information,
- determine adjusted light measurement information by subtracting said daylight contribution from said light measurement information, and
- estimate said harvesting time for said section (45,46) of said plant growing environment based on said adjusted light measurement information.

14. A method of estimating a harvesting time in a plant growing environment, said method comprising:
- determining (101) a light setting used by one or more light sources to illuminate a section of said plant growing environment with horticulture grow light that, in terms of light intensity and spectrum, is suitable for growing plants (43) in said plant growing environment, said light setting comprising at least a color component associated with said section of said plant growing environment;
**characterized in** the method comprising
- obtaining (103) light measurement information from one or more color sensors when said one or more color sensors are co-located with said one or more light sources; and
- estimating (105) a harvesting time for said section of said plant growing environment based on (i) said light measurement information, (ii) an intensity of said color component in said light setting and (iii) a cultivation temperature protocol for said section of said plant growing environment, said cultivation temperature protocol comprising one or more assumed cultivation temperatures.

15. A computer program or suite of computer programs comprising at least one software code portion or a computer program product storing at least one software code portion, the software code portion, when run on a computer system, being configured for performing the method of claim 14.

## Patentansprüche

1. System (1,61) zum Schätzen einer Erntezeit in einer Pflanzenwachstumsumgebung, das System (1,61) umfassend:
mindestens eine Sensorschnittstelle (3,63); und
mindestens einen Prozessor (5,65), der konfiguriert ist zum:
- Bestimmen einer Lichteinstellung, die durch eine oder mehrere Lichtquellen (11-13) verwendet wird, um einen Teil (45,46) der Pflanzenwachstumsumgebung mit Gartenbauwachstumslicht zu beleuchten, das, hinsichtlich einer Lichtintensität und eines Spektrum, zum Wachsenlassen von Pflanzen (43) in der Pflanzenwachstumsumgebung geeignet ist, die Lichteinstellung umfassend mindestens eine Farbkomponente, die dem Teil (45,46) der Pflanzenwachstumsumgebung zugeordnet ist,
**dadurch gekennzeichnet, dass** der mindestens eine Prozessor konfiguriert ist zum
- Erhalten, über die mindestens eine Sensorschnittstelle (3,63), von Lichtmessinformationen von einem oder mehreren Farbsensoren (21-23), wenn der eine oder die mehreren Farbsensoren (21-23) mit der einen oder den mehreren Lichtquellen (11-13) gemeinsam angeordnet sind, und
- Schätzen einer Erntezeit für den Teil (45,46) der
Pflanzenwachstumsumgebung basierend auf (i) den Lichtmessinformationen, (ii) einer Intensität der Farbkomponente in der Lichteinstellung und (iii) einem Kultivierungstemperaturprotokoll für den Teil (45,46) der Pflanzenwachstumsumgebung, das Kultivierungstemperaturprotokoll umfassend eine oder mehrere angenommene Kultivierungstemperaturen.

2. System (1,61) nach Anspruch 1, wobei der mindestens eine Prozessor (5,65) konfiguriert ist, um einen Umgebungsparameter basierend auf einer Differenz zwischen der geschätzten Erntezeit und einer Zielerntezeit zu steuern.

3. System (61) nach Anspruch 2, ferner umfassend mindestens eine Ausgabeschnittstelle (64), wobei der mindestens eine Prozessor (65) konfiguriert ist zum:
- Bestimmen eines angepassten Temperaturprotokolls für den Teil (45,46) der Pflanzenwachstumsumgebung basierend auf dem Kultivierungstemperaturprotokoll und einer Differenz zwischen der geschätzten Erntezeit und der Zielerntezeit, das angepasste Temperaturprotokoll umfassend eine oder mehrere angepasste Kultivierungstemperaturen, und
- Ausgeben, über die mindestens eine Ausgabeschnittstelle (64), eines Temperatursteuersignals basierend auf dem angepassten Temperaturprotokoll.

4. System (1,61) nach einem der vorstehenden Ansprüche, wobei der mindestens eine Prozessor (5,65) konfiguriert ist, um einen Prozentsatz eines reflektierten Lichts der Farbkomponente basierend auf den Lichtmessinformationen und der Intensität der Farbkomponente in der Lichteinstellung zu bestimmen und die Erntezeit basierend auf dem Prozentsatz des reflektierten Lichts und dem Kultivierungstemperaturprotokoll zu schätzen.

5. System (1,61) nach Anspruch 4, wobei der mindestens eine Prozessor (5,65) konfiguriert ist, um einen potenziellen aktuellen Ertrag basierend auf dem Prozentsatz des reflektierten Lichts zu schätzen und die Erntezeit basierend auf einer Differenz zwischen dem potenziellen aktuellen Ertrag und einem gewünschten Ertrag und dem Kultivierungstemperaturprotokoll zu schätzen.

6. System (1,61) nach Anspruch 5, wobei der mindestens eine Prozessor (5,65) konfiguriert ist, um den potenziellen aktuellen Ertrag basierend auf dem Prozentsatz des reflektierten Lichts und Kalibrierungsinformationen zu schätzen, die Kalibrierungsinformationen umfassend einen benutzereingegeben Ertrag, der dem Prozentsatz einer reflektierten Beleuchtung zugeordnet ist.

7. System (1,61) nach Anspruch 6, wobei der mindestens eine Prozessor (5,65) konfiguriert ist, um einen oder mehrere Parameterwerte zu bestimmen, Kalibrierungsdaten aus den Kalibrierungsinformationen basierend auf dem einen oder den mehreren Parameterwerten auszuwählen und den potenziellen aktuellen Ertrag basierend auf dem Prozentsatz des reflektierten Lichts und den Kalibrierungsdaten zu schätzen.

8. System (1,61) nach Anspruch 7, wobei der eine oder die mehreren Parameterwerte mindestens eine umfassen von: einer Position der einen oder der mehreren Lichtquellen (11-13) in Bezug auf die Pflanzen (43), einer Wachstumsphase der Pflanzen (43), einer Stängeldichte der Pflanzen (43) und einer Dichte der Pflanzen (43) in dem Teil (45,46) der Pflanzenwachstumsumgebung.

9. System (1,61) nach einem der Ansprüche 5 bis 8, wobei der mindestens eine Prozessor (5,65) konfiguriert ist, um den Ertrag im Laufe der Zeit bei verschiedenen Temperaturen zu erfassen und die Erntezeit ferner basierend auf dem erfassten Ertrag bei der einen oder den mehreren angenommenen Kultivierungstemperaturen zu schätzen.

10. System (1,61) nach einem der vorstehenden Ansprüche, wobei der eine oder die mehreren Farbsensoren (21-23) eine Vielzahl von Farbsensoren umfassen und der mindestens eine Prozessor (5,65) konfiguriert ist, um eine durchschnittliche Lichtmessung, die durch die Vielzahl von Farbsensoren gemessen wird, zu bestimmen und die Erntezeit für den Teil (45,46) der Pflanzenwachstumsumgebung basierend auf der durchschnittlichen Lichtmessung und der Intensität der Farbkomponente in der Lichteinstellung zu schätzen.

11. System (1) nach einem der vorstehenden Ansprüche, ferner umfassend mindestens eine Steuerschnittstelle, wobei der mindestens eine Prozessor (5) konfiguriert ist, um, über die mindestens eine Steuerschnittstelle, die eine oder die mehreren Lichtquellen (11-13) zu steuern, um den Teil (45,46) der Pflanzenwachstumsumgebung gemäß der Lichteinstellung zu beleuchten.

12. System (1) nach Anspruch 11, wobei der mindestens eine Prozessor (5) konfiguriert ist, um, über die mindestens eine Steuerschnittstelle, die eine oder die mehreren Lichtquellen (11-13) gemäß der Lichteinstellung zu steuern, während die Lichtquellen (11-13) innerhalb einer Entfernung von Organen der Pflanze positioniert sind.

13. System (1) nach Anspruch 11 oder 12, wobei der mindestens eine Prozessor (5) konfiguriert ist zum:
- Steuern, über die mindestens eine Steuerschnittstelle, der einen oder der mehreren Lichtquellen (11-13), um Licht mit einem ersten Lichtausgabepegel während eines ersten Moments und Licht mit einem zweiten Lichtausgabepegel während eines zweiten Moments wiederzugeben, wobei ein Intervall zwischen dem ersten Moment und dem zweiten Moment eine Intervallschwelle nicht überschreitet,
- Erhalten, über die mindestens eine Sensorschnittstelle (3), erster Lichtmessinformationen, die in dem ersten Moment gemessen werden, und zweiter Lichtmessinformationen, die in dem zweiten Moment gemessen werden, von mindestens einem des einen oder der mehreren Farbsensoren (21-23),
- Bestimmen eines Tageslichtbeitrags basierend auf einer Differenz zwischen den ersten Lichtmessinformationen und den zweiten Lichtmessinformationen,
- Bestimmen angepasster Lichtmessinformationen durch Subtrahieren des Tageslichtbeitrags von den Lichtmessinformationen, und
- Schätzen der Erntezeit für den Teil (45,46) der Pflanzenwachstumsumgebung basierend auf den angepassten Lichtmessinformationen.

14. Verfahren zum Schätzen einer Erntezeit in einer Pflanzenwachstumsumgebung, das Verfahren umfassend:
- Bestimmen (101) einer Lichteinstellung, die durch eine oder mehrere Lichtquellen verwendet wird, um einen Teil der Pflanzenwachstumsumgebung mit Gartenbauwachstumslicht zu beleuchten, das, hinsichtlich der Lichtintensität und des Spektrums, für das Wachsenlassen von Pflanzen (43) in der Pflanzenwachstumsumgebung geeignet ist, die Lichteinstellung umfassend mindestens eine Farbkomponente, die dem Teil der Pflanzenwachstumsumgebung zugeordnet ist;
**dadurch gekennzeichnet, dass** das Verfahren umfasst
- Erhalten (103) von Lichtmessinformationen von einem oder mehreren Farbsensoren, wenn der eine oder die mehreren Farbsensoren mit der einen oder den mehreren Lichtquellen gemeinsam angeordnet ist; und
- Schätzen (105) einer Erntezeit für den Teil der
Pflanzenwachstumsumgebung basierend auf (i) den Lichtmessinformationen, (ii) einer Intensität der Farbkomponente in der Lichteinstellung und (iii) einem Kultivierungstemperaturprotokoll für den Teil der Pflanzenwachstumsumgebung, das Kultivierungstemperaturprotokoll umfassend eine oder mehrere angenommene Kultivierungstemperaturen.

15. Computerprogramm oder Suite von Computerprogrammen, umfassend mindestens einen Softwarecodeabschnitt oder ein Computerprogrammprodukt, das mindestens einen Softwarecodeabschnitt speichert, wobei der Softwarecodeabschnitt, wenn er auf einem Computersystem ausgeführt wird, zum Durchführen des Verfahrens nach Anspruch 14 konfiguriert ist.

## Revendications

1. Système (1, 61) permettant d'estimer un temps de récolte dans un environnement de croissance de plantes, ledit système (1, 61) comprenant :
au moins une interface de capteur (3, 63) ; et
au moins un processeur (5, 65) configuré pour :
- déterminer un réglage de lumière utilisé par une ou plusieurs sources de lumière (11-13) pour illuminer une section (45, 46) dudit environnement de croissance de plantes avec de la lumière de croissance horticole qui, en termes d'intensité de lumière et de spectre, est appropriée pour la croissance de plantes (43) dans ledit environnement de croissance de plantes, ledit réglage de lumière comprenant au moins une composante de couleur associée à ladite section (45, 46) dudit environnement de croissance de plantes,
**caractérisé en ce que** l'au moins un processeur est configuré pour
- obtenir, par l'intermédiaire de ladite au moins une interface de capteur (3, 63), des informations de mesure de lumière provenant d'un ou plusieurs capteurs de couleur (21-23) lorsque ledit ou lesdits capteurs de couleur (21-23) sont colocalisés avec ladite ou lesdites sources de lumière (11-13), et
- estimer un temps de récolte pour ladite section (45, 46) dudit environnement de croissance de plantes en fonction (i) desdites informations de mesure de lumière, (ii) d'une intensité de ladite composante de couleur dans ledit réglage de lumière et (iii) d'un protocole de température de culture pour ladite section (45, 46) dudit environnement de croissance de plantes, ledit protocole de température de culture comprenant une ou plusieurs températures de culture adoptées.

2. Système (1, 61) selon la revendication 1, dans lequel ledit au moins un processeur (5, 65) est configuré pour commander un paramètre environnemental en fonction d'une différence entre ledit temps de récolte estimé et un temps de récolte cible.

3. Système (61) selon la revendication 2, comprenant en outre au moins une interface de sortie (64), dans lequel ledit au moins un processeur (65) est configuré pour :
- déterminer un protocole de température ajusté pour ladite section (45, 46) dudit environnement de croissance de plantes en fonction dudit protocole de température de culture et d'une différence entre ledit temps de récolte estimé et ledit temps de récolte cible, ledit protocole de température ajusté comprenant une ou plusieurs températures de culture ajustées, et
- délivrer en sortie, par l'intermédiaire de ladite au moins une interface de sortie (64), un signal de commande de température en fonction dudit protocole de température ajusté.

4. Système (1, 61) selon l'une quelconque des revendications précédentes, dans lequel ledit au moins un processeur (5, 65) est configuré pour déterminer un pourcentage de lumière réfléchie de ladite composante de couleur en fonction desdites informations de mesure de lumière et de ladite intensité de ladite composante de couleur dans ledit réglage de lumière et estimer ledit temps de récolte en fonction dudit pourcentage de lumière réfléchie et dudit protocole de température de culture.

5. Système (1, 61) selon la revendication 4, dans lequel ledit au moins un processeur (5, (65) est configuré pour estimer un rendement actuel potentiel en fonction dudit pourcentage de lumière réfléchie et estimer ledit temps de récolte en fonction d'une différence entre ledit rendement actuel potentiel et un rendement souhaité et dudit protocole de température de culture.

6. Système (1, 61) selon la revendication 5, dans lequel ledit au moins un processeur (5, (65) est configuré pour estimer ledit rendement actuel potentiel en fonction dudit pourcentage de lumière réfléchie et d'informations d'étalonnage, lesdites informations d'étalonnage comprenant un rendement entré par l'utilisateur associé audit pourcentage d'éclairage réfléchi.

7. Système (1, 61) selon la revendication 6, dans lequel ledit au moins un processeur (5, (65) est configuré pour déterminer une ou plusieurs valeurs de paramètre, sélectionner des données d'étalonnage parmi lesdites informations d'étalonnage en fonction de ladite ou desdites valeurs de paramètre, et estimer ledit rendement actuel potentiel en fonction dudit pourcentage de lumière réfléchie et desdites données d'étalonnage.

8. Système (1, 61) selon la revendication 7, dans lequel ladite ou lesdites valeurs de paramètre comprennent au moins l'un parmi : une position de ladite ou desdites sources de lumière (11-13) par rapport auxdites plantes (43), une phase de croissance desdites plantes (43), une densité de tiges desdites plantes (43) et une densité de plantes (43) dans ladite section (45, 46) dudit environnement de croissance de plantes.

9. Système (1, 61) selon l'une quelconque des revendications 5 à 8, dans lequel ledit au moins un processeur (5, 65) est configuré pour enregistrer le rendement au fil du temps à diverses températures et estimer ledit temps de récolte en fonction en outre dudit rendement enregistré à ladite ou auxdites températures de culture adoptées.

10. Système (1, 61) selon l'une quelconque des revendications précédentes, dans lequel ledit ou lesdits capteurs de couleur (21-23) comprennent une pluralité de capteurs de couleur et ledit au moins un processeur (5, 65) est configuré pour déterminer une mesure moyenne de lumière mesurée par ladite pluralité de capteurs de couleur et estimer ledit temps de récolte pour ladite section (45, 46) dudit environnement de croissance de plantes en fonction de ladite mesure moyenne de lumière et de ladite intensité de ladite composante de couleur dans ledit réglage de lumière.

11. Système (1) selon l'une quelconque des revendications précédentes, comprenant en outre au moins une interface de commande, dans lequel ledit au moins un processeur (5) est configuré pour commander, par l'intermédiaire de ladite au moins une interface de commande, ladite ou lesdites sources de lumière (11-13) pour illuminer ladite section (45, 46) dudit environnement de croissance de plantes selon ledit réglage de lumière.

12. Système (1) selon la revendication 11, dans lequel ledit au moins un processeur (5) est configuré pour commander, par l'intermédiaire de ladite au moins une interface de commande, ladite ou lesdites sources de lumière (11-13) selon ledit réglage de lumière alors que lesdites sources de lumière (11-13) sont positionnées à moins d'une distance d'organes de ladite plante.

13. Système (1) selon la revendication 11 ou 12, dans lequel ledit au moins un processeur (5) est configuré pour :
- commander, par l'intermédiaire de ladite au moins une interface de commande, ladite ou lesdites sources de lumière (11-13) pour restituer de la lumière avec un premier niveau de sortie de lumière pendant un premier moment et de la lumière avec un second niveau de sortie de lumière pendant un second moment, un intervalle entre ledit premier moment et ledit second moment ne dépassant pas un seuil d'intervalle,
- obtenir, par l'intermédiaire de ladite au moins une interface de capteur (3), des premières informations de mesure de lumière mesurées audit premier moment et des secondes informations de mesure de lumière mesurées audit second moment auprès d'au moins l'un parmi ledit ou lesdits capteurs de couleur (21-23),
- déterminer une contribution de lumière du jour en fonction d'une différence entre lesdites premières informations de mesure de lumière et lesdites secondes informations de mesure de lumière,
- déterminer des informations de mesure de lumière ajustées en soustrayant ladite contribution de lumière du jour desdites informations de mesure de lumière, et
- estimer ledit temps de récolte pour ladite section (45, 46) dudit environnement de croissance de plantes en fonction desdites informations de mesure de lumière ajustées.

14. Procédé d'estimation d'un temps de récolte dans un environnement de croissance de plantes, ledit procédé comprenant :
- la détermination (101) d'un réglage de lumière utilisé par une ou plusieurs sources de lumière pour illuminer une section dudit environnement de croissance de plantes avec de la lumière de croissance horticole qui, en termes d'intensité de lumière et de spectre, est appropriée pour la croissance de plantes (43) dans ledit environnement de croissance de plantes, ledit réglage de lumière comprenant au moins une composante de couleur associée à ladite section dudit environnement de croissance de plantes ;
**caractérisé en ce que** le procédé comprend
- l'obtention (103) d'informations de mesure de lumière auprès d'un ou plusieurs capteurs de couleur lorsque ledit ou lesdits capteurs de couleur sont colocalisés avec ladite ou lesdites sources de lumière ; et
- l'estimation (105) d'un temps de récolte pour ladite section dudit environnement de croissance de plantes en fonction (i) desdites informations de mesure de lumière, (ii) d'une intensité de ladite composante de couleur dans ledit réglage de lumière et (iii) d'un protocole de température de culture pour ladite section dudit environnement de croissance de plantes, ledit protocole de température de culture comprenant une ou plusieurs températures de culture adoptées.

15. Programme informatique ou suite de programmes informatiques comprenant au moins une portion de code logiciel ou un produit programme d'ordinateur stockant au moins une portion de code logiciel, la portion de code logiciel, lorsqu'elle est exécutée sur un système informatique, étant configurée pour la mise en oeuvre du procédé selon la revendication 14.
